# EUROPEAN PATENT APPLICATION

(11) **EP 4 736 989 A1**
(43) Date of publication of application: **06.05.2026**
(21) Application number: 24831666.3
(22) Date of filing: 12.06.2024
(51) Int. Cl.: B01D 53/14, C08K 5/17, C08L 67/00, C08L 69/00, C08L 71/02

(54) **ACIDIC GAS-ABSORBING LIQUID AND ACIDIC GAS REDUCTION METHOD**

(30) Priority: 29.06.2023 JP 2023106993
(71) Applicant: AGC INC., Chiyoda-ku, Tokyo 1008405 (JP); NATIONAL UNIVERSITY CORPORATION TOKAI NATIONAL HIGHER EDUCATION AND RESEARCH SYSTEM, Nagoya-shi, Aichi 464-8601 (JP)
(72) Inventor: IKAWA, Seiya, Tokyo 100-8405 (JP); SUZUKI, Toyokazu, Tokyo 100-8405 (JP); KOGUCHI, Ryohei, Tokyo 100-8405 (JP); MACHIDA, Hiroshi, Nagoya-shi, Aichi 464-8601 (JP); NORINAGA, Koyo, Nagoya-shi, Aichi 464-8601 (JP)
(74) Representative: Müller-Boré & Partner Patentanwälte PartG mbB
(86) International application number: PCT/JP2024/021261
(87) International publication number: WO 2025/004800

(57) **Abstract**

Provided are an acidic gas absorbing solution and acidic gas reducing method that enable reduction in energy required for recovering an acidic gas from a gas with less impact on solvent loss. The acidic gas absorbing solution of the present invention is an acidic gas absorbing solution that reversibly absorbs and desorbs carbon dioxide, the acidic gas absorbing solution containing: an oxygen-containing polymer; and an amine compound, wherein the oxygen-containing polymer has at least one group selected from the group consisting of an oxyalkylene group, a carbonate group, and an ester group, has a number-average molecular weight of 300 to 4000, has a boiling point of 200°C or more, and has a solubility parameter of 19.5 to 26.0 (MPa)^{1/2}, and a difference between the solubility parameter of the oxygen-containing polymer and a solubility parameter of the amine compound is 4.0 to 6.3 (MPa)^{1/2}.

## Description

### Technical Field

The present invention relates to an acidic gas absorbing solution and acidic gas reducing method that are useful for reducing an acidic gas in a gas.

### Background Art

Known as a method for recovering an acidic gas, which is typified by carbon dioxide, from a gas is a method of absorbing and separating an acidic gas by using an acidic gas absorbing solution (hereinafter, also referred to as an absorbing solution, simply) containing water, an amine compound and an organic solvent, and desorbing the acidic gas absorbed in the absorbing solution from the absorbing solution by heating and recovering the acidic gas. Such an absorbing solution, which is also called a chemical absorbing solution, utilizes reversible reaction of formation and regeneration of an amine salt by an amine compound.

From the viewpoint of energy saving for such acidic gas recovering methods, various methods have been proposed for reducing energy required for heating in desorbing an acidic gas from an absorbing solution. For example, PTL1 proposes a method of using an absorbing solution containing an amine compound and an organic solvent having a difference in solubility parameter from the amine compound within a specific range. In this method, a combination of an amine compound and an alcohol such as 1-butanol and 1-pentanol or an ether such as diethylene glycol diethyl ether is selected, thereby allowing a phenomenon in which an acidic gas-absorbed solution undergoes phase separation into a high-acidic-gas-content phase and a low-acidic-gas-content phase to be utilized. According to PTL1, heating the high-acidic-gas-content phase selectively for acidic gas desorption treatment reduces energy required for recovering the acidic gas compared to the case in which acidic gas desorption treatment is performed on the entire absorbing solution.

### Citation List

### Patent Literature

PTL1: JP 6460974 B

### Summary of Invention

### Technical Problem

However, in the absorbing solution described in PTL1, when an organic solvent as a component contained therein volatilizes, heating for absorbing solution regeneration through acidic gas desorption increases cost for a process to recover the solvent that has volatilized or for replenishing the organic solvent. Moreover, the absorbing solution has poor regeneration efficiency for reuse.

The present invention has been made to solve such a problem, and an object of the present invention is to provide an acidic gas absorbing solution and acidic gas reducing method that enable reduction in energy required for recovering an acidic gas from a gas with less negative influence on solvent loss.

### Solution to Problem

The present invention is based on a finding that reduction of the volatilization of an acidic gas absorbing solution can be achieved together with reduction in energy required for recovering an acidic gas from a gas by allowing an acidic gas absorbing solution containing a combination of a specific hydrophilic oxygen-containing polymer and hydrophilic amine compound to absorb carbon dioxide.

The present invention provides the following means.
[1] An acidic gas absorbing solution that reversibly absorbs and desorbs carbon dioxide, the acidic gas absorbing solution comprising: an oxygen-containing polymer; and an amine compound, wherein the oxygen-containing polymer has at least one group selected from the group consisting of an oxyalkylene group, a carbonate group, and an ester group, has a number-average molecular weight of 300 to 4000, has a boiling point of 200°C or more, and has a solubility parameter of 19.5 to 26.0 (MPa)^{1/2}, and a difference between the solubility parameter of the oxygen-containing polymer and a solubility parameter of the amine compound is 4.0 to 6.3 (MPa)^{1/2}.
[2] The acidic gas absorbing solution according to [1], wherein the oxygen-containing polymer has a group represented as -OR at a terminus, the R is a hydrogen atom or a bonding group having 1 to 8 carbon atoms, and the bonding group is optionally linear or branched, optionally has an unsaturated bond, and optionally contains at least either one of a nitrogen atom and an oxygen atom.
[3] The acidic gas absorbing solution according to [1] or [2], wherein the oxygen-containing polymer is at least one selected from the group consisting of polyether monool, polyether polyol, polyester polyol, polycarbonate polyol, and polyether polycarbonate polyol.
[4] The acidic gas absorbing solution according to any one of [1] to [3], wherein the solubility parameter of the amine compound is 23.5 to 30.0 (MPa)^{1/2}.
[5] The acidic gas absorbing solution according to any one of [1] to [4], comprising the oxygen-containing polymer in an amount of 5 to 90% by mass and the amine compound in an amount of 5 to 90% by mass.
[6] The acidic gas absorbing solution according to [5], wherein the acidic gas absorbing solution comprises water in an amount of 20% by mass or less.
[7] The acidic gas absorbing solution according to any one of [1] to [6], for a recovery and/or separation process for an acidic gas.
[8] An acidic gas reducing method, wherein the acidic gas absorbing solution according to any one of [1] to [7] and a gas comprising carbon dioxide are brought into contact to reduce carbon dioxide in the gas.
[9] The acidic gas reducing method according to [8], wherein the acidic gas absorbing solution that has undergone phase separation through contact with the gas comprising carbon dioxide is heated to desorb carbon dioxide, and a resulting acidic gas absorbing solution is recovered and reused as an acidic gas absorbing solution for bringing into contact with a gas comprising carbon dioxide.

### Advantageous Effects of Invention

The present invention provides an acidic gas absorbing solution and acidic gas reducing method that enable reduction in energy required for recovering an acidic gas from a gas with less impact on solvent loss.

### Description of Embodiments

The following shows the definitions and meanings of terms in the present specification.

Each numerical range expressed with "to" means that the numerical values before and after "to" are the lower limit value and the upper limit value, respectively.

The number-average molecular weight (Mn) of an oxygen-containing polymer is defined as a molecular weight determined through gel permeation chromatography (GPC) using polystyrene as standards.

The molecular weight of each oxygen-containing polymer (hydroxy group terminus) in terms of hydroxyl value was calculated from the expression 56100 / (hydroxyl value) × (number of terminal hydroxy groups in one molecule), wherein the hydroxyl value was determined in accordance with JIS K 1557-1: 2007.

The boiling point of an oxygen-containing polymer is a value calculated with the chemical structural formula drawing software "ChemDraw v17.1" (CambridgeSoft).

A solubility parameter is a value calculated by the Fedors method at 25°C. For the chemical formulas of chemicals in calculation by the Fedors method, known structural formulas were applied to amine compounds, and the number of repeating units in each oxygen-containing polymer was defined as an integer value (rounded off) given by subtracting the formula masses of the terminal structures specified through ¹H-NMR and ¹³C-NMR analyses from the number-average molecular weight and then dividing the resultant by the formula mass of the constituent unit of the oxygen-containing polymer.

### [Acidic gas absorbing solution]

The acidic gas absorbing solution of the present invention is an acidic gas absorbing solution that reversibly absorbs and desorbs carbon dioxide, and contains an oxygen-containing polymer and an amine compound. The oxygen-containing polymer has at least one group selected from the group consisting of an oxyalkylene group, a carbonate group, and an ester group, has a number-average molecular weight of 300 to 4000, has a boiling point of 200°C or more, and has a solubility parameter of 19.5 to 26.0 (MPa)^{1/2}. A difference between the solubility parameter of the oxygen-containing polymer and the solubility parameter of the amine compound is 4.0 to 6.3 (MPa)^{1/2}.

The acidic gas is a gas containing carbon dioxide, and may contain an additional acidic gas such as hydrogen sulfide and sulfurous acid gas. The acidic gas absorbing solution of an embodiment of the present invention (hereinafter, referred to as the present embodiment) is capable of reversibly absorbing and desorbing carbon dioxide in particular among acidic gases.

The following describes the case that the acidic gas to be absorbed by the acidic gas absorbing solution is carbon dioxide as an example.

The acidic gas absorbing solution of the present embodiment contains a hydrophilic oxygen-containing polymer having a specific solubility parameter and a hydrophilic amine compound with the difference between their solubility parameters falling within a specific numerical range.

Once absorbing carbon dioxide, the acidic gas absorbing solution having the configuration, in which the oxygen-containing polymer and the amine compound are compatible with each other and well mixed together, undergoes phase separation into a lower layer containing an amine salt formed through absorption of carbon dioxide and an upper layer containing the oxygen-containing polymer. In desorbing carbon dioxide from the acidic gas absorbing solution that has undergone phase separation by heating, an amine compound regenerated through desorption of an acidic gas from the amine salt is extracted into the oxygen-containing polymer in the upper layer, and the state in which the oxygen-containing polymer and the amine compound are well mixed together recovers again. Thus, the acidic gas absorbing solution having carbon dioxide absorbed therein can be regenerated through recovering the well-mixed state as a result of desorption of carbon dioxide by heating. At that time, the oxygen-containing polymer in the upper layer resulting from the phase separation of the acidic gas absorbing solution though absorption of carbon dioxide is expected to exert an effect to promote the desorption of carbon dioxide. This probably leads to achievement of reduction in energy required for recovering carbon dioxide from a gas.

The oxygen-containing polymer has higher boiling points and less volatility than conventional organic solvents to be used in combination with an amine compound, thus causing less impact on solvent loss. Moreover, the acidic gas absorbing solution has superior regeneration efficiency for reuse.

### (Oxygen-containing polymer)

The oxygen-containing polymer contained in the acidic gas absorbing solution is a polymer having at least one group selected from the group consisting of an oxyalkylene group, a carbonate group, and an ester group and having a number-average molecular weight (Mn) of 300 to 3000.

The oxygen-containing polymer having the configuration allows the acidic gas absorbing solution to absorb carbon dioxide and readily undergo phase separation into a lower layer containing an amine salt formed through the absorption of carbon dioxide and an upper layer containing the oxygen-containing polymer.

Preferably, the oxygen-containing polymer has a group represented as -OR at a terminus. R in -OR is preferably a hydrogen atom or a bonding group having 1 to 8 carbon atoms, and more preferably a hydrogen atom or a bonding group having 1 to 4 carbon atoms. The bonding group is optionally linear or branched, optionally has an unsaturated bond, optionally contains at least either one of a nitrogen atom and an oxygen atom, and is preferably a hydrogen atom or an alkyl group. Examples of the alkyl group as the bonding group include a methyl group, an ethyl group, a propyl group, a butyl group, a pentyl group, a hexyl group, an octyl group, and a 2-ethylhexyl group.

Having a terminal group containing an oxygen atom, the oxygen-containing polymer allows carbon dioxide to be more readily absorbed by the absorbing solution.

Examples of the oxygen-containing polymer include polyethers, polycarbonates, and polyesters; among them, polyether monool, polyether polyol, polyester polyol, polycarbonate polyol, and polyether polycarbonate polyol are preferable. For the oxygen-containing polymer, one of those may be used singly; otherwise, two or more thereof may be used in combination.

### <Polyether monool>

The polyether monool is preferably a product obtained by subjecting an alkylene oxide to addition polymerization with an initiator having one active hydrogen atom in one molecule. The addition polymerization can be performed by a known method in the presence of a catalyst.

Preferable as the initiator is a compound having one hydroxy group in one molecule, and examples thereof include monohydric alcohols such as methanol, ethanol, 2-propanol, n-butanol, tert-butanol, allyl alcohol, isobutanol, 2-ethylhexanol, decyl alcohol, lauryl alcohol, tridecanol, cetyl alcohol, stearyl alcohol, oleyl alcohol, ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol mono-tert-butyl ether, ethylene glycol monohexyl ether, ethylene glycol monophenyl ether, diethylene glycol monomethyl ether, diethylene glycol monoethyl ether, diethylene glycol monopropyl ether, diethylene glycol monobutyl ether, diethylene glycol monobenzyl ether, triethylene glycol monomethyl ether, triethylene glycol monoethyl ether, triethylene glycol monobutyl ether, tetraethylene glycol monomethyl ether, and tetraethylene glycol monobutyl ether. For the initiator, one of those may be used singly; otherwise, two or more thereof may be used in combination.

The alkylene oxide preferably has 2 to 20 carbon atoms, more preferably has 2 to 10 carbon atoms, and even more preferably has 3 to 8 carbon atoms. Examples of the alkylene oxide include propylene oxide, 1,2-butylene oxide, 2,3-butylene oxide, tetramethylene oxide (tetrahydrofuran), and α-olefin oxides having 5 to 20 carbon atoms. Preferable among them is propylene oxide. For the alkylene oxide, one of those may be used singly; otherwise, two or more thereof may be used in combination.

Known catalysts are applicable as the catalyst, and examples thereof include alkali catalysts such as potassium hydroxide, transition metal compound- porphyrin complex catalysts such as a complex obtained by reacting an organoaluminum compound and porphyrin, composite metal cyanide complex catalysts such as a zinc hexacyanocobaltate complex having tert-butanol as ligands, and catalysts consisting of a phosphazene compound. For the catalyst, one of those may be used singly; otherwise, two or more thereof may be used in combination.

### <Polyether polyol>

Preferable as the polyether polyol is a product obtained by subjecting an alkylene oxide to addition polymerization with an initiator having two or more active hydrogen atoms in one molecule.

The initiator is preferably a compound having two or more hydroxy groups in one molecule, and examples thereof include dihydric alcohols such as ethylene glycol, diethylene glycol, propylene glycol, dipropylene glycol, tripropylene glycol, 1,3-propanediol, 1,3-butanediol, 1,4-butanediol, 1,6-hexanediol, 1,4-cyclohexanediol, bisphenol A, bisphenol F, bisphenol S, and resorcin; and trihydric or higher alcohols such as glycerin, diglycerin, trimethylolpropane, pentaerythritol, dipentaerythritol, tripentaerythritol, glucose, sorbitol, dextrose, fructose, sucrose, methyl glucoside, trehalose, novolac, resol, and castor oil. Water is also applicable as the initiator. Preferable among those are ethylene glycol, diethylene glycol, propylene glycol, dipropylene glycol, tripropylene glycol, glycerin, trimethylolpropane, pentaerythritol, and sorbitol. For the initiator, one of those may be used singly; otherwise, two or more thereof may be used in combination.

Specific examples of the alkylene oxide are the same as those of the alkylene oxide as a raw material for synthesis of the polyether monool.

Likewise, the addition polymerization can be performed by the same method as for synthesis of the polyether monool.

Specific examples of the polyether polyol include polyethylene glycol, polypropylene glycol, polyoxyethylene polyoxypropylene glycol, polyoxytetramethylene glycol, and addition polymer of polyoxytetramethylene glycol and alkylene oxide.

### <Polyester polyol>

Preferable as the polyester polyol is a reaction product obtained by subjecting a dibasic acid and a polyhydric alcohol to esterification reaction or subjecting a dibasic acid dialkyl ester and a polyhydric alcohol to transesterification reaction. The esterification reaction or transesterification reaction can be performed by a known method in the presence of a catalyst.

Examples of the dibasic acid include aliphatic dibasic acids such as succinic acid, glutaric acid, adipic acid, pimelic acid, suberic acid, azelaic acid, sebacic acid, dodecanedioic acid, brassylic acid, and dimer acid; alicyclic dicarboxylic acids such as 1,4-cyclohexanedicarboxylic acid; and aromatic dibasic acids such as phthalic acid, isophthalic acid, terephthalic acid, and naphthalenedicarboxylic acid.

Examples of the dibasic acid dialkyl ester include dimethyl esters, diethyl esters, dipropyl esters, and dibutyl esters of those dibasic acids shown as examples. For the dibasic acid, one of those may be used singly; otherwise, two or more thereof may be used in combination.

Examples of the polyhydric alcohol include diols such as ethylene glycol, diethylene glycol, propylene glycol, dipropylene glycol, triethylene glycol, tripropylene glycol, neopentyl glycol, 1,4-butanediol, and 1,6-hexanediol; and trihydric or higher alcohols such as glycerin, trimethylolpropane, trimethylolethane, pentaerythritol, sorbitol, and sucrose. For the polyhydric alcohol, one of those may be used singly; otherwise, two or more thereof may be used in combination.

Examples of the catalyst include titanium compounds such as tetrabutyl titanate, tetraisopropyl titanate, tetra-2-ethylhexyl titanate, and titanium acetylacetonate; tin compounds such as dibutyltin oxide, methylphenyltin oxide, and hexaethyltin oxide; and magnesium compounds such as magnesium carbonate, magnesium oxide, and magnesium alkoxide. For the catalyst, one of those may be used singly; otherwise, two or more thereof may be used in combination.

### <Polycarbonate polyol>

Examples of the polycarbonate polyol include polycondensates of a polyhydric alcohol and a carbonate compound and polycondensates of a polyhydric alcohol, together with a cyclic ester, and a carbonate compound. Synthesis of the polycarbonate polyol can be performed by a known method.

Examples of the polyhydric alcohol include aliphatic diols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, 1,20-eicosanediol, 2-methyl-1,8-octanediol, 2,2-dimethyl-1,3-propanediol, 2-ethyl-1,3-hexanediol, 2-ethyl-1,6-hexanediol, 2-methyl-1,4-butanediol, 2-methyl-1,3-propanediol, 3-methyl-1,5-pentanediol, 2,4-dimethyl-1,5-pentanediol, and 2,4-diethyl-1,5-pentanediol; alicyclic diols such as 1,3-cyclohexanediol, 1,3-cyclohexanedimethanol, 1,4-cyclohexanediol, 1,4-cyclohexanedimethanol, isosorbide, 2-bis(4-hydroxycyclohexyl)-propane, 2,7-norbomanediol, 2,3-norbomanediol, tetrahydrofuran-2,2-dimethanol, and 2,5-bis(hydroxymethyl)-1,4-dioxane; and aromatic diols such as 5,5-bis(hydroxymethyl)-2-phenyl-1,3-dioxane, p-xylene glycol, p-tetrachloroxylenediol, 1,4-bis(hydroxyethoxy)benzene, and 2,2-bis[(4-hydroxyethoxy)phenyl]propane. For the polyhydric alcohol, one of those may be used singly; otherwise, two or more thereof may be used in combination.

Examples of the carbonate compound include dimethyl carbonate, diethyl carbonate, dipropyl carbonate, dibutyl carbonate, diphenyl carbonate, ethylene carbonate, trimethylene carbonate, propylene carbonate, 1,2-butylene carbonate, and neopentylene carbonate. For the carbonate compound, one of those may be used singly; otherwise, two or more thereof may be used in combination.

Examples of the cyclic ester include ε-caprolactone, β-propiolactone, β-methyl-β-propiolactone, δ-valerolactone, glycolide, and lactide. For the cyclic ester, one of those may be used singly; otherwise, two or more thereof may be used in combination.

### <Polyether polycarbonate polyol>

Examples of the polyether polycarbonate polyol include polycondensates of a polyether polyol and a carbonate compound. The polyether polycarbonate polyol may be a product obtained by subjecting a diol compound different from any polyether polyol to copolymerization. Synthesis of the polyether polycarbonate polyol can be performed by a known method.

Specific examples of the polyether polyol to be used as a raw material for synthesis of the polyether polycarbonate polyol include the polyether polyols shown above, and specific examples of the carbonate compound include those that are the same as the carbonate compounds shown above as a raw material for synthesis of the polycarbonate polyol.

In the case that the terminal hydroxy group of the oxygen-containing polymer as described above is converted to form an oxygen-containing polymer into which a group represented as -OR but being not a hydroxy group has been introduced, the conversion of the hydroxy group can be performed, for example, through alkoxylation, esterification, or urethanization by a known method. Terminal alkoxylation is preferable for enhanced hydrophobicity.

For example, a method of using an organohalogen compound such as an halogenated alkyl is applied to the alkoxylation of the terminal hydroxy group of the oxygen-containing polymer. Examples of the organohalogen compound include organochlorine compounds such as methyl chloride, ethyl chloride, vinyl chloride, n-propyl chloride, isopropyl chloride, allyl chloride, n-butyl chloride, isobutyl chloride, sec-butyl chloride, tert-butyl chloride, 2-chloroethylmethyl ether, 2-chloroethylethyl ether, 2-chloroethylpropyl ether, and 2-chloroethylbutyl ether; organobromine compounds such as methyl bromide, ethyl bromide, vinyl bromide, n-propyl bromide, isopropyl bromide, allyl bromide, n-butyl bromide, isobutyl bromide, sec-butyl bromide, tert-butyl bromide, 2-bromoethylmethyl ether, 2-bromoethylethyl ether, 2-bromoethylpropyl ether, and 2-bromoethylbutyl ether; and organoiodine compounds such as methyl iodide, ethyl iodide, vinyl iodide, n-propyl iodide, isopropyl iodide, allyl iodide, n-butyl iodide, isobutyl iodide, sec-butyl iodide, tert-butyl iodide, and 2-iodoethylmethyl ether. Among them, methyl chloride, allyl chloride, methyl bromide, allyl bromide, methyl iodide, and allyl iodide are preferable for efficient conversion of the hydroxy group.

Examples of the oxygen-containing polymer at a terminus of which a group represented as -OR but being not a hydroxy group has been introduced include polyoxyalkylene dimethyl ether, polyoxyalkylene diethyl ether, polyoxyalkylene dipropyl ether, polyoxyalkylene diisopropyl ether, polyoxyalkylene diallyl ether, polyoxyalkylene dibutyl ether, polyoxyalkylene di(sec-butyl) ether, polyoxyalkylene di(tert-butyl) ether. polyoxyalkylene dipentyl ether, polyoxyalkylene dihexyl ether, polyoxyalkylene diheptyl ether, polyoxyalkylene dioctyl ether, polyoxyalkylene di(2-ethylhexyl) ether, polyoxyalkylene ethyl methyl ether, polyoxyalkylene propyl methyl ether, polyoxyalkylene isopropyl methyl ether, polyoxyalkylene butyl methyl ether, polyoxyalkylene sec-butyl methyl ether, polyoxyalkylene tert-butyl methyl ether, polyoxyalkylene pentyl methyl ether, polyoxyalkylene hexyl methyl ether, polyoxyalkylene octyl methyl ether, polyoxyalkylene 2-ethylhexyl methyl ether, polyoxyalkylene methyl allyl ether, polyoxyalkylene ethyl allyl ether, polyoxyalkylene propyl allyl ether, polyoxyalkylene isopropyl allyl ether, polyoxyalkylene butyl allyl ether, polyoxyalkylene sec-butyl allyl ether, polyoxyalkylene tert-butyl allyl ether, polyoxyalkylene pentyl allyl ether, polyoxyalkylene hexyl allyl ether, polyoxyalkylene heptyl allyl ether, polyoxyalkylene octyl allyl ether, and polyoxyalkylene 2-ethylhexyl allyl ether. Among them, polyoxyalkylene dimethyl ether, polyoxyalkylene diallyl ether, polyoxyalkylene ethyl methyl ether, polyoxyalkylene propyl methyl ether, polyoxyalkylene isopropyl methyl ether, polyoxyalkylene butyl methyl ether, polyoxyalkylene sec-butyl methyl ether, polyoxyalkylene tert-butyl methyl ether, polyoxyalkylene pentyl methyl ether, polyoxyalkylene hexyl methyl ether, polyoxyalkylene heptyl methyl ether, polyoxyalkylene octyl methyl ether, polyoxyalkylene 2-ethylhexyl methyl ether, polyoxyalkylene methyl allyl ether, polyoxyalkylene ethyl allyl ether, polyoxyalkylene propyl allyl ether, polyoxyalkylene isopropyl allyl ether, polyoxyalkylene butyl allyl ether, polyoxyalkylene sec-butyl allyl ether, polyoxyalkylene tert-butyl allyl ether, polyoxyalkylene pentyl allyl ether, polyoxyalkylene hexyl allyl ether, polyoxyalkylene heptyl allyl ether, and polyoxyalkylene 2-ethylhexyl allyl ether are preferable, and polyoxyalkylene dimethyl ether are more preferable, for easiness in alkoxylation.

### <Number-average molecular weight>

The number-average molecular weight (Mn) of the oxygen-containing polymer is 300 to 4000, preferably 350 or more, and more preferably 400 or more, and, preferably 3500 or less, and more preferably 3000 or less.

Having Mn of 300 or more, the oxygen-containing polymer tends to have a boiling point of 200°C or more. Mn should be 4000 or less for setting the difference in solubility parameters from the amine compound within a specific range.

### <Boiling point>

The boiling point of the oxygen-containing polymer is 200°C or more, preferably 220°C or more, and more preferably 250°C or more.

The boiling point of 200°C or more results in reduced volatilization in heating for desorbing carbon dioxide from the acidic gas absorbing solution, also leading to reduced impact on solvent loss, and the acidic gas absorbing solution can be efficiently reused.

### <Solubility parameter>

The solubility parameter (δₐ) of the oxygen-containing polymer is 19.5 to 26.0 (MPa)^{1/2}.

Having δₐ of 19.5 (MPa)^{1/2} or more, the oxygen-containing polymer can be regarded to be hydrophilic, and, through absorption of carbon dioxide under a well-mixed state with the amine compound, the acidic gas absorbing solution readily undergoes phase separation into a lower layer containing an amine salt formed and an upper layer containing the oxygen-containing polymer. With δₐ of 26.0 (MPa)^{1/2} or less, more carbon dioxide is absorbed by the acidic gas absorbing solution as a tendency.

The solubility parameter (δₐ) of the oxygen-containing polymer is preferably 19.6 (MPa)^{1/2} or more, and more preferably 19.7 (MPa)^{1/2} or more for easiness in the phase separation, and preferably 25.0 (MPa)^{1/2} or less, and more preferably 24.0 (MPa)^{1/2} or less for easy absorption of carbon dioxide by the acidic gas absorbing solution.

In the case that two or more oxygen-containing polymers are present in the acidic gas absorbing solution, the volume-average value of the solubility parameters of the oxygen-containing polymers is used as δₐ.

Better compatibility is provided as the difference between the solubility parameter (δₐ) of the oxygen-containing polymer and the solubility parameter (δ_{b}) of the amine compound (|δₐ - δ_{b}|) is smaller. Irrespective of the relationship between the magnitudes of δₐ and δ_{b}, |δₐ - δ_{b}| is 4.0 to 6.3 (MPa)^{1/2}.

With |δₐ - δ_{b}| of 4.1 (MPa)^{1/2} or more, through absorption of carbon dioxide, the acidic gas absorbing solution readily undergoes phase separation into a lower layer containing an amine salt formed and an upper layer containing the oxygen-containing polymer. |δₐ - δ_{b}| of 6.3 (MPa)^{1/2} or less indicates good compatibility between the oxygen-containing polymer and the amine compound, a well-mixed state is readily formed, and the acidic gas absorbing solution absorbs more carbon dioxide.

|δₐ - δ_{b}| is preferably 4.1 (MPa)^{1/2} or more, and more preferably 4.2 (MPa)^{1/2} or more for easiness in the phase separation, and preferably 6.2 (MPa)^{1/2} or less for easy absorption of carbon dioxide by the acidic gas absorbing solution.

### (Amine compound)

The amine compound is preferably hydrophilic for allowing the acidic gas absorbing solution having carbon dioxide absorbed therein to readily undergo phase separation into a lower layer containing an amine salt formed and an upper layer containing the oxygen-containing polymer.

With considering the range of the difference from the solubility parameter (δₐ) of the oxygen-containing polymer (|δₐ - δ_{b}|), the solubility parameter (δ_{b}) is preferably 23.5 to 30.0 (MPa)^{1/2}, more preferably 23.7 (MPa)^{1/2} or more, even more preferably 24.0 (MPa)^{1/2} or more, furthermore preferably 25.0 (MPa)^{1/2} or more, and particularly preferably more than 25.5 (MPa)^{1/2}, and, more preferably 29.1 (MPa)^{1/2} or less, and even more preferably 28.2 (MPa)^{1/2} or less.

In the case that two or more amine compounds are present in the absorbing solution, the volume-average value of the solubility parameters of the amine compounds is used as δ_{b}.

The amine compound preferably has a high boiling point for reduced volatilization in heating for desorbing carbon dioxide from the acidic gas absorbing solution and the resulting reduced impact on solvent loss, and for efficient reuse of the acidic gas absorbing solution, and the boiling point is preferably 130°C or more, more preferably 140°C or more, and even more preferably 150°C or more.

Specific examples of the amine compound include 1,3-diaminopropane, 1-amino-2-propanol, 2-aminoethanol, DL-2-amino-1-propanol, 2-(2-aminoethoxy)ethanol, and 2-(methylamino)ethanol.

The amounts of the oxygen-containing polymer and amine compound contained in the acidic gas absorbing solution are preferably 5 to 90% by mass and 5 to 90% by mass, respectively, for allowing the acidic gas absorbing solution to sufficiently exert the absorption ability for carbon dioxide and allowing the acidic gas absorbing solution having carbon dioxide absorbed therein to readily undergo phase separation into a lower layer containing an amine salt formed and an upper layer containing the oxygen-containing polymer.

The amount of the oxygen-containing polymer contained in the acidic gas absorbing solution is more preferably 30% by mass or more, and even more preferably 40% by mass or more, and more preferably 70% by mass or less, and even more preferably 60% by mass or less.

The amount of the amine compound contained in the acidic gas absorbing solution is more preferably 30% by mass or more, and even more preferably 40% by mass or more, and more preferably 70% by mass or less, and even more preferably 60% by mass or less.

The acidic gas absorbing solution preferably contains moisture in addition to the oxygen-containing polymer and the amine compound. In the case that the acidic gas absorbing solution contains moisture, the amount of moisture contained therein is preferably 20% by mass or less, more preferably 15% by mass or less, and even more preferably 10% by mass or less.

With moisture contained in the acidic gas absorbing solution, the amine salt formed through absorption of carbon dioxide is readily extracted into a lower layer containing water, and phase separation readily occurs. With the moisture content of the acidic gas absorbing solution being 20% by mass or less, the influence of the latent heat of water on energy required for heating can be reduced in recovering carbon dioxide absorbed in the acidic gas absorbing solution through desorption by heating.

An additive such as an antioxidant, a corrosion inhibitor, and a viscosity modifier may be contained in the acidic gas absorbing solution, as necessary, in a manner without interfering the effects of the present invention.

The acidic gas absorbing solution of the present embodiment can be produced by mixing the above oxygen-containing polymer and amine compound. Water or any of the aforementioned additives may be added and mixed, as necessary.

The acidic gas absorbing solution of the present embodiment is preferred for a recovery and/or separation process for an acidic gas, and can be preferably used particularly for the case that the acidic gas is carbon dioxide, namely, for a carbon dioxide recovery and/or separation process.

Examples of the carbon dioxide recovery and/or separation process include such a process that a gas containing carbon dioxide and the acidic gas absorbing solution are brought into contact to allow carbon dioxide to be selectively absorbed and separated, the solution having carbon dioxide absorbed therein is heated or subjected to reduced pressure to diffuse carbon dioxide, which is recovered, and the solution after the diffusion of carbon dioxide is recovered and regenerated as an acidic gas absorbing solution.

The temperature in allowing the acidic gas absorbing solution to absorb carbon dioxide is preferably -10°C or more, and more preferably 0°C or more for reduction in energy loads for cooling the gas, and preferably 50°C or less, and more preferably 40°C or less for sufficient separation of carbon dioxide.

The pressure of the gas in allowing the acidic gas absorbing solution to absorb carbon dioxide is not limited.

The temperature in allowing carbon dioxide to diffuse from the acidic gas absorbing solution is preferably 50°C or more, and more preferably 70°C or more in order to sufficiently release carbon dioxide from the acidic gas absorbing solution, and preferably 120°C or less, more preferably 100°C or less, and even more preferably 90°C or less for preventing the degradation of the acidic gas absorbing solution.

The temperature difference between absorption of carbon dioxide in the acidic gas absorbing solution and diffusion of carbon dioxide from the acidic gas absorbing solution is set to balance the thermal energy for diffusing carbon dioxide and the amount of energy to be recovered, and is preferably 80°C or less, and more preferably 60°C or less. The energy required can be reduced by reducing the temperature difference through a combination with such a process as hydrogen stripping and a heat pump (see JP 6906766 B).

### [Acidic gas reducing method]

In the acidic gas reducing method of the present embodiment, the acidic gas absorbing solution of the present embodiment and a gas containing carbon dioxide are brought into contact to reduce carbon dioxide in the gas.

In desorbing carbon dioxide absorbed in the acidic gas absorbing solution of the present embodiment by heating, the acidic gas absorbing solution having carbon dioxide absorbed therein is in a phase-separated state, and as a result the desorption of carbon dioxide is readily promoted. Accordingly, the acidic gas reducing method with the acidic gas absorbing solution of the present embodiment enables reduction of carbon dioxide in a gas and reduction in energy required for recovering the carbon dioxide.

The oxygen-containing polymer has higher boiling points and less volatility than conventional organic solvents to be used in combination with an amine compound, thus causing less impact on solvent loss.

The contact between the acidic gas absorbing solution and the gas may be achieved, for example, by a method of adding the acidic gas absorbing solution into the gas, a method of continuously circulating the gas in a container filled with the acidic gas absorbing solution, or a method of putting the gas in a container filled with the acidic gas absorbing solution. In addition, a method of providing packing material in a container, spraying the acidic gas absorbing solution to the gas, or bubbling the acidic gas absorbing solution with the gas can be used to increase the efficiency of contact between the acidic gas absorbing solution and the gas.

In the acidic gas reducing method of the present embodiment, the acidic gas absorbing solution that has undergone phase separation through contact with a gas containing carbon dioxide is heated to desorb carbon dioxide, and the resulting acidic gas absorbing solution can be recovered and reused as an acidic gas absorbing solution for bringing into contact with a gas containing carbon dioxide.

As described above, the acidic gas absorbing solution of the present embodiment, after having carbon dioxide absorbed therein through contact with a gas containing carbon dioxide and undergoing phase separation, recovers the well-mixed state through desorption of carbon dioxide by heating, and can be regenerated as an acidic gas absorbing solution. This acidic gas absorbing solution can be reused for reduction of the acidic gas, and such an acidic gas reducing method enables recycling of an acidic gas absorbing solution.

### Examples

The following specifically describes the present invention on the basis of examples, but the present invention is not limited by the following examples, and various modifications without departing from the subject matter of the present invention are permitted.

### [Synthesis of oxygen-containing polymers]

### (Synthesis Example 1)

With 1000 g of propylene glycol as an initiator, 4863 g of propylene oxide (PO) was polymerized in the presence of potassium hydroxide, and then neutralization and removal of neutralized salts were performed to yield PPG (1) (bifunctional polypropylene glycol (PPG) (number of terminal hydroxy groups: 2); Mn: 550).

### (Synthesis Examples 2 and 3)

PPG (2) (bifunctional PPG; Mn: 880) or PPG (3) (bifunctional PPG; Mn: 1300) was obtained in the same manner as in Synthesis Example 1 except that the amount of PO to be polymerized was changed to 8486 g (Synthesis Example 2) or 12158 g (Synthesis Example 3) in Synthesis Example 1.

### [Preparation of acidic gas absorbing solutions]

With each of the formulations shown as Examples 1 to 11 in Table 1, a mixture of 60% by mass of an oxygen-containing compound (polymer), 30% by mass of an amine compound, and 10% by mass of water was prepared as an acidic gas absorbing solution. The following shows the oxygen-containing polymers and amine compounds used for the acidic gas absorbing solutions of Examples 1 to 11.

### <Oxygen-containing polymers>

- PPGs (1) to (3): bifunctional PPGs produced in Synthesis Examples 1 to 3
- PPG (4): tripropylene glycol; manufactured by Tokyo Chemical Industry Co., Ltd., Mn: 330 <Amine compounds>
- MAE: 2-(methylamino)ethanol
- AP: DL-2-amino-1-propanol
- MEA: 2-aminoethanol (synonym: monoethanolamine)

Table 1 shows the solubility parameters (δₐ) of the oxygen-containing compounds (polymers), the solubility parameters (δ_{b}) of the amine compounds, and the differences between δₐ and δ_{b} (|δₐ - δ_{b}|).

### [Evaluation of acidic gas absorbing solutions]

The acidic gas absorbing solutions of the examples were evaluated on items shown below. The evaluation results are shown in Table 1. Examples 1 to 3 are working examples, and Examples 4 to 11 are comparative examples.

### <Evaluation on phase separation>

For each of the acidic gas absorbing solutions, carbon dioxide was absorbed in 100 g of the acidic gas absorbing solution by bubbling with carbon dioxide at 1 L/min and 40°C for 60 minutes. The resulting solution was left to stand at 40°C for 10 minutes, and visually observed for the presence or absence of phase separation. Cases with the occurrence of phase separation after the absorption of carbon dioxide were rated as "A", cases with the well-mixed state retained without any occurrence of phase separation even after the absorption of carbon dioxide as "B", and cases with the occurrence of phase separation already before the absorption of carbon dioxide as "C".

### <Evaluation on volatility>

For each of the acidic gas absorbing solutions, the mass was measured before and after heating at 120°C for 2 hours. Cases with a mass change (reduction) of less than 1.0% by mass were rated as "A", and cases with a mass change of 1.0% by mass or more as "B".

An acidic gas absorbing solution with the rating A hardly volatilized in desorbing carbon dioxide, and can be said to allow recovery of carbon dioxide and regeneration of the acidic gas absorbing solution at higher efficiency.

**[Table 1]**

| Example | Oxygen-containing compound (polymer) (60% by mass) | | | | Amine compound (30% by mass) | | Others (10% by mass) | \|δₐ-δ_{b}\| | Evaluation on phase separation | Evaluation on volatility |
|---|---|---|---|---|---|---|---|---|---|---|
| | Type | Mn | Boiling point [°C] | δₐ [(MPa)^{1/2}] | Type | δ_{b} [(MPa)^{1/2} ] | Type | [(MPa)^{1/2}] | | |
| 1 | PPG (1) | 550 | 270≤ | 21.1 | MAE | 25.6 | Water | 4.5 | A | A |
| 2 | PPG (1) | 550 | 270≤ | 21.1 | AP | 27.3 | Water | 6.2 | A | A |
| 3 | PPG (2) | 880 | 270≤ | 19.9 | MAE | 25.6 | Water | 5.7 | A | A |
| 4 | PPG (2) | 880 | 270≤ | 19.9 | AP | 27.3 | Water | 7.4 | C | A |
| 5 | PPG (3) | 1300 | 270≤ | 19.3 | MAE | 25.6 | Water | 6.4 | C | A |
| 6 | PPG (3) | 1300 | 270≤ | 19.3 | AP | 27.3 | Water | 8.0 | C | A |
| 7 | PPG (4) | 330 | 273 | 24.8 | MAE | 25.6 | Water | 0.8 | B | A |
| 8 | PPG (4) | 330 | 273 | 24.8 | AP | 27.3 | Water | 2.5 | B | A |
| 9 | 1-pentanol | 88 | 138 | 22.6 | AP | 27.3 | Water | 4.7 | A | B |
| 10 | 1-butanol | 74 | 118 | 23.2 | AP | 27.3 | Water | 4.1 | A | B |
| 11 | 1-butanol | 74 | 118 | 23.2 | MEA | 29.3 | Water | 6.2 | A | B |

As can be seen from Table 1, acidic gas absorbing solutions having a high boiling point and containing a hydrophilic oxygen-containing polymer having a specific solubility parameter and an amine compound with the difference in solubility parameters from the oxygen-containing polymer falling within a specific range (Examples 1 to 3) were found to undergo phase separation through absorption of carbon dioxide. The acidic gas absorbing solutions less volatilized when carbon dioxide was desorbed by heating under a phase-separated state, and thus can be said to cause less impact on solvent loss. Accordingly, in the present embodiment, it can be said that the organic phase can be efficiently separated and recovered, the energy required for recovering the acidic gas from the gas can be reduced, and the acidic gas absorbing solution can be efficiently regenerated.

## Claims

1. An acidic gas absorbing solution that reversibly absorbs and desorbs carbon dioxide, the acidic gas absorbing solution comprising:
an oxygen-containing polymer; and an amine compound, wherein
the oxygen-containing polymer has at least one group selected from the group consisting of an oxyalkylene group, a carbonate group, and an ester group, has a number-average molecular weight of 300 to 4000, has a boiling point of 200°C or more, and has a solubility parameter of 19.5 to 26.0 (MPa)^{1/2}, and
a difference between the solubility parameter of the oxygen-containing polymer and a solubility parameter of the amine compound is 4.0 to 6.3 (MPa)^{1/2}.

2. The acidic gas absorbing solution according to claim 1, wherein the oxygen-containing polymer has a group represented as -OR at a terminus, the R is a hydrogen atom or a bonding group having 1 to 8 carbon atoms, and the bonding group is optionally linear or branched, optionally has an unsaturated bond, and optionally contains at least either one of a nitrogen atom and an oxygen atom.

3. The acidic gas absorbing solution according to claim 1, wherein the oxygen-containing polymer is at least one selected from the group consisting of polyether monool, polyether polyol, polyester polyol, polycarbonate polyol, and polyether polycarbonate polyol.

4. The acidic gas absorbing solution according to claim 1, wherein the amine compound has a solubility parameter of 23.5 to 30.0 (MPa)^{1/2}.

5. The acidic gas absorbing solution according to claim 1, comprising the oxygen-containing polymer in an amount of 5 to 90% by mass and the amine compound in an amount of 5 to 90% by mass.

6. The acidic gas absorbing solution according to claim 5, wherein the acidic gas absorbing solution comprises water in an amount of 20% by mass or less.

7. The acidic gas absorbing solution according to claim 1, for a recovery and/or separation process for an acidic gas.

8. An acidic gas reducing method, wherein the acidic gas absorbing solution according to any one of claims 1 to 7 and a gas comprising carbon dioxide are brought into contact to reduce carbon dioxide in the gas.

9. The acidic gas reducing method according to claim 8, wherein the acidic gas absorbing solution that has undergone phase separation through contact with the gas comprising carbon dioxide is heated to desorb carbon dioxide, and a resulting acidic gas absorbing solution is recovered and reused as an acidic gas absorbing solution for bringing into contact with a gas comprising carbon dioxide.
